# EUROPÄISCHE PATENTSCHRIFT

(11) **EP 0 563 599 B1**
(45) Veröffentlichungstag und Bekanntmachung des Hinweises auf die Patenterteilung: **25.09.1996**
(21) Anmeldenummer: 93103345.0
(22) Anmeldetag: 03.03.1993
(51) Int. Cl.: H02B 1/40, H02B 1/26, B65D 45/30

(54) **Gehäuse zum Einbau von elektrischen oder elektronischen Bauteilen bzw. Baugruppen**
Cabinet for installation of electric or electronic components and assemblies
Boîtier pour le montage de composants et assemblages électriques ou électroniques

(30) Priorität: 01.04.1992 DE 9204455 U
(43) Veröffentlichungstag der Anmeldung: 06.10.1993
(73) Patentinhaber: BOPLA GEHÄUSE SYSTEME GmbH, D-32257 Bünde (DE)
(72) Erfinder: Behrendt, Horst, W-4972 Löhne 4 (DE); Krömer, Andreas, W-4900 Herford (DE); Niehausmeier, Uwe, W-4986 Rödinghausen (DE)
(74) Vertreter: Patentanwälte Dipl.-Ing. Bodo Thielking Dipl.-Ing. Otto Elbertzhagen

(56) Entgegenhaltungen:
- DE-A- 1 122 435
- DE-U- 9 204 455
- US-A- 5 012 601
- ELEKTROTECHNIK, Bd. 68, Nr. 11, Juni 1986, Würzburg, DE, Seiten 28-32; 'Erleichtern die Arbeit'
- BUREAUX D'ETUDES, Nr. 38, Oktober 1987, Paris, FR, Seiten 44-48; N. KWASNY : 'Des coffrets électroniques concus avec la production'

## Beschreibung

Die Erfindung betrifft ein Gehäuse zum Einbau von elektrischen oder elektronischen Bauteilen bzw. Baugruppen, mit einer Frontplatte und einem die Frontplatte übergreifenden Rahmen, wobei der Rahmen in unterschiedlicher Höhe an den Gehäuseseitenwänden verrastbar ist.

Bei einem bekannten Gehäuse dieser Art ("Bureaux d'Etudes Automatismes" No. 38, 1987, Paris, S. 44 bis 48) sind lediglich zwei unterschiedliche Befestigungspositionen für den Rahmen am Gehäuse vorgesehen, und zwar eine Position mit eingelegter Frontplatte und eine Position ohne Frontplatte.

Ausgehend von einem Gehäuse der als bekannt vorausgesetzten Art liegt der Erfindung die Aufgabe zugrunde, das Gehäuse so auszugestalten, daß es an Frontplatten unterschiedlicher Dicke angepaßt werden kann.

Die Lösung dieser Aufgabe erfolgt erfindungsgemäß dadurch, daß der Rahmen durch an diesem angeordnete Rastrippen bzw. Rastnuten und an den Gehäuseseitenwänden angeordnete Rastnuten bzw. Rastrippen verrastet wird und daß der Rahmen in jeder Höhe mit seinem Innenrand auf der Frontplatte entsprechender Dicke aufliegt.

Auf einem anderen technischen Gebiet, nämlich bei Bilderrahmen, ist es bereits bekannt (US-A 5,012,601), daß der Außenrahmen in unterschiedlicher Höhe an dem Innenteil des Bilderrahmens verrastbar ist, um die eingesetzten Fotos und die Glasscheibe zu fixieren.

Bei einer bevorzugten Ausführungsform der Erfindung weist der Rahmen einen zumindest annähernd U-förmigen Querschnit auf, dessen Basis von der Frontplatte wegweist und dessen einer Schenkel auf der Frontplatte aufliegt.

Die erfindungsgemäße Gestaltung ist technisch und ästhetisch besonders befriedigend. Die unterschiedliche Dicke der Frontplatte führt lediglich dazu, daß am Außenrand des Gehäuses Schattenfugen unterschiedlicher Breite entstehen. Hingegen ist zwischen Innenrand des Rahmens und Frontplatte stets eine dichte Anlage gewährleistet, so daß an dieser Stelle keine Schmutzecken entstehen können.

Nachstehend wird eine bevorzugte Ausführungsform der Erfindung anhand der Zeichnung im einzelnen beschrieben. Es zeigen:

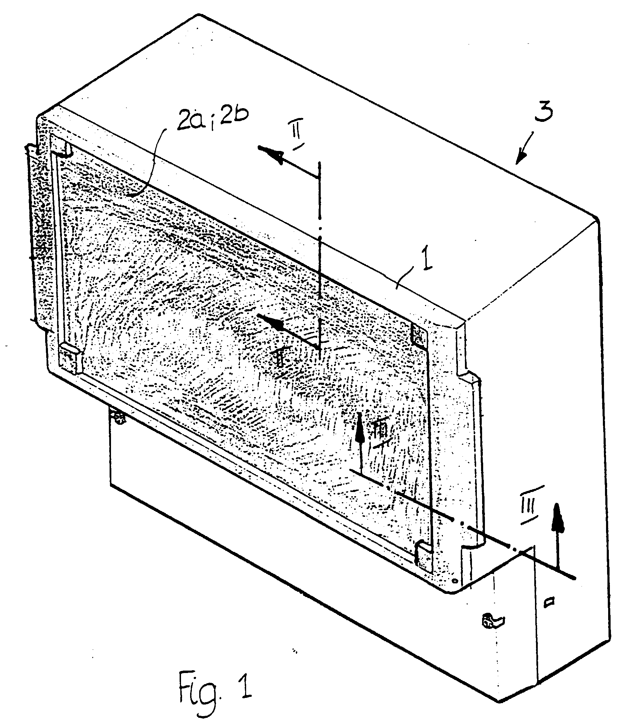

- Figur 1 -: eine perspektivische Ansicht eines Gehäuses,

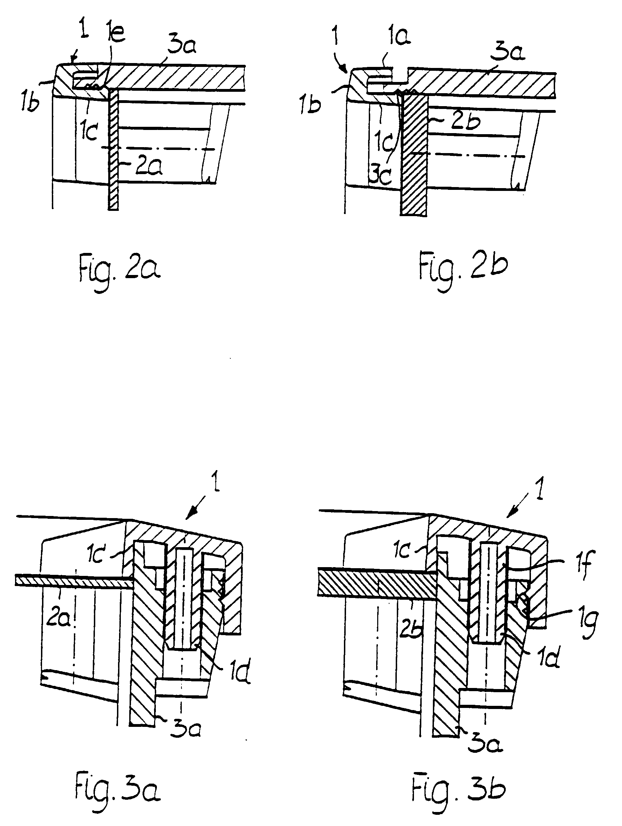

- Figur 2a -: einen Teilschnitt entlang Ebene II-II in Figur 1 bei einer Frontplatte bestimmter Dicke,
- Figur 2b -: einen Teilschnitt entlang Ebene II-II bei einer Frontplatte größerer Dicke,
- Figur 3a -: einen Teilschnitt entlang Ebene III-III gemäß Figur 1 bei einer Frontplattendicke gemäß Figur 2a,
- Figur 3b -: einen Teilschnitt entlang Ebene III-III in Figur 1 bei einer Frontplattendicke entsprechend Figur 2b,

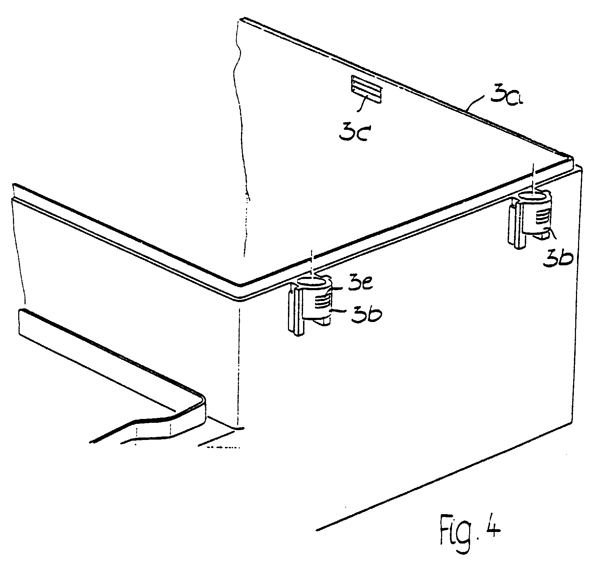

- Figur 4 -: einen Teilbereich des Gehäuseunterteils in perspektivischer Darstellung.

Auf ein Gehäuseunterteil 3 mit Seitenwänden 3a ist eine Frontplatte 2a bzw. 2b aufgelegt, die von einem Rahmen 1 übergriffen wird. Der Rahmen 1 besitzt annähernd U-förmigen Querschnitt mit einer zur Frontseite weisenden Basis 1b sowie zwei Seitenschenkeln 1a und 1c. Die Seitenwand 3a besitzt an ihrer Innenseite in unterschiedlicher Höhe angeordnete Rastnuten 3c. In eine dieser Rastnuten greift - je nach Dicke der Frontplatte 2a bzw. 2b - eine Rastrippe le am inneren Schenkel 1c des Rahmens 1. An den beiden Schmalseiten sind angeformte Augen 3b vorgesehen, in die Zapfen 1f des Rahmens 1 klemmend eingreifen. An der Außenseite der Augen 3b sind Rastnuten 3e in unterschiedlicher Höhe angeordnet. In eine dieser Rastnuten 3e greift jeweils eine Rastrippe 1g des Rahmens 1 ein.

## Patentansprüche

1. Gehäuse zum Einbau von elektrischen oder elektronischen Bauteilen bzw. Baugruppen, mit einer Frontplatte (2a, 2b) und einem die Frontplatte (2a, 2b) übergreifenden Rahmen (1), wobei der Rahmen (1) in unterschiedlicher Höhe an den Gehäuseseitenwänden (3a) verrastbar ist, dadurch gekennzeichnet,
daß der Rahmen (1) durch an diesem angeordnete Rastrippen (1e) bzw. Rastnuten und an den Gehäuseseitenwänden (3a) angeordnete Rastnuten (3c) bzw. Rastrippen verrastet wird und daß der Rahmen (1) in jeder Höhe mit seinem Innenrand (1c) auf der Frontplatte (2a, 2b) entsprechender Dicke aufliegt.

2. Gehäuse nach Anspruch 1,
dadurch gekennzeichnet,
daß der Rahmen (1) einen zumindest annähernd U-förmigen Querschnitt aufweist, dessen Basis (1b) von der Frontplatte (2a; 2b) wegweist und dessen einer Schenkel (1c) auf der Frontplatte (2a; 2b) aufliegt.

3. Gehäuse nach Anspruch 1 oder 2,
dadurch gekennzeichnet,
daß an den Seitenwänden (3a) Augen (3b) angeformt sind, in die am Rahmen (1) vorgesehene Zapfen (1f) klemmend eingreifen.

## Claims

1. Housing for the installation of electrical or electronic component parts or groups of components with a front plate (2a, 2b) and a frame (1) engaging over the front plate (2a, 2b) wherein the frame (1) can be snap fitted at different heights on the side walls (3a) of the housing,
characterised in that the frame (1) is snap fitted through detent ribs (1e) and detent grooves arranged on the frame and detent grooves (3c) and detent ribs arranged on the side walls (3a) of the housing and that the frame (1) rests at each height with its inner edge (1c) on the front plate (2a,2b) of corresponding thickness.

2. Housing according to claim 1 characterised in that the frame (1) has an at least approximately U-shaped cross-section whose base (1b) points away from the front plate (2a,2b) and whose one arm (1c) rests on the front plate (2a;2b).

3. Housing according to claim 1 or 2 characterised in that eyes (3b) are moulded on the side walls (3a) into which the studs (1f) provided on the frame (1) engage with clamping action.

## Revendications

1. Boîtier pour le montage de composants et assemblages électriques ou électroniques avec une plaque frontale et un cadre embrassant celle-ci, ce cadre pouvant être enclenché, à différentes hauteurs, dans les parois latérales du boîtier,
caractérisé en ce que
le cadre (1) est enclenché à l'aide de nervures d'arrêt (1e) ou d'encoches d'arrêt dont il est équipé et d'encoches d'arrêt (3c) ou de nervures d'arrêt prévues sur les parois latérales (3a) du boîtier et que le bord intérieur (1c) du cadre (1) porte, à n'importe quelle hauteur, contre la plaque frontale (2a, 2b) d'épaisseur adéquate.

2. Boîtier selon la revendication 1,
caractérisé en ce que
le cadre (1) présente une section transversale ayant approximativement la forme d'un "U" dont la base (1b) est dirigée à l'opposé de la plaque frontale (2a; 2b) et dont l'une des branches (1c) porte contre la plaque frontale (2a; 2b).

3. Boîtier selon la revendication 1 ou 2,
caractérisé en ce que
des yeux (3b) sont formés dans les parois latérales (3a), des tenons (1f) équipant le cadre (1) s'engageant dans ces yeux (3b) aux fins de serrage.
